# EUROPEAN PATENT APPLICATION

(11) **EP 2 309 578 A1**
(43) Date of publication of application: **13.04.2011**
(21) Application number: 10150504.8
(22) Date of filing: 12.01.2010
(51) Int. Cl.: H01M 8/02, H01M 8/04

(54) **Fuel cell structure with a porous metal plate for cooling**

(30) Priority: 09.10.2009 TW 98134217
(71) Applicant: Chung-Hsin Electric and Machinery Manufacturing Corp., Taipei County (TW)
(72) Inventor: Chiu, Wen-Hsin, Kwei Shan Township 33 383 (TW); Chen, Feng-Chang, Kwei Shan Township 33383 (TW); Chen, Yen-Yu, Kwei Shan Township 33383 (TW)
(74) Representative: Viering, Jentschura & Partner

(57) **Abstract**

A fuel cell structure (10) with a porous metal plate includes a membrane electrode assembly (MEA) (20), a first porous metal plate (30), a metal plate (40), and a pair of end plates (50). The first porous metal plate (30) and the metal plate (40) are disposed on opposite outer surfaces (241, 251) of two gas diffusion layers (GDLs) (24, 25) of the MEA (20), respectively, and have fuel channels (32, 42) contacting with the GDLs (24, 25). The end plates (50) are arranged on outer surfaces (33, 43) of the first porous metal plate (30) and of the metal plate (40), respectively, to close cooling-liquid flow channels (31, 41) of the first porous metal plate (30) and of the metal plate (40). A pressure difference between fuel and cooling liquid within the fuel cell structure (10) pushes the cooling liquid flowing through the cooling-liquid flow channels (31) of the first porous metal plate (30) to seep into the fuel channels (32) spontaneously and hence humidify the fuel automatically, thereby maintaining the reaction efficiency of the fuel cell structure (10).

## Description

### Field of the Invention

The present invention relates to a fuel cell structure with a porous metal plate and, more particularly, to a fuel cell structure which has a porous metal plate and is for use in a fuel cell and capable of automatically humidifying fuel in the fuel cell structure.

### Background of the Invention

In order to promote the use of green energy, governments and enterprises around the world have in recent years put great emphasis on the development of fuel cell technologies. Therefore, significant progress has been made in fundamental research as well as in the development of commercial applications. For instance, electric cars driven by fuel cells have become a major subject of research and development for large automobile corporations as well as the core of competition in such industries around the globe. Besides, micro fuel cells also give an impetus to the future 3C electronic industry.

For a fuel cell to generate adequate electric power, the reaction efficiency of the fuel cell must be maintained at a certain level. However, as reaction in the fuel cell goes on, the temperature inside the fuel cell rises. As a result, the relative humidity of fuel gas in the fuel cell is lowered, and moisture contained in the membrane electrode assembly (MEA) of the fuel cell gradually evaporates. This phenomenon may cause a decrease in the voltage of the cell stack and, even worse, cause the fuel gas (e.g., hydrogen) to penetrate the proton exchange membrane (PEM) of the MEA and mix with air, thus resulting in combustion and subsequent damage to part of the cell stack.

A solution to the aforesaid problem involves guiding the fuel gas through a humidifying device before the fuel gas flows into the cell stack, thus increasing the humidity of the fuel gas. Currently, fuel gas is humidified generally through an external humidifying process or an internal humidifying process. In the external humidifying process, fuel gas is humidified by an external humidifying device before flowing into the fuel cell system. However, the additional humidifying device not only has a complex design which adds to the production cost of the fuel cell, but it also consumes high amounts of power, hence lowering the power generation efficiency of the fuel cell.

Therefore, an alternative approach is to replace the bipolar plates of a fuel cell with porous graphite plates. By means of the pressure difference existing between a fuel channel and a cooling-liquid flow channel of the fuel cell, the cooling liquid is forced to flow from the cooling-liquid flow channel into the fuel channel through pores of the porous graphite plates, thus humidifying the fuel gas and wetting the PEM. However, due to lack of hydrophilicity, the porous graphite plates must be subjected to a hydrophilic treatment prior to use, which adds to the production cost of the porous graphite plates. Moreover, the porous graphite plates are brittle, have poor ductility, and therefore are difficult to process. Hence, while thin porous graphite plates are highly desirable, their fragility during processing tends to incur a high burden in processing cost.

Furthermore, as the porous graphite plates are sintered from graphite powder or graphite particles, the graphite powder or particles at the edges of the pores of the porous graphite plates are easily washed away by the cooling liquid after extended use. Consequently, the pores of the porous graphite plates grow larger, and the cooling liquid becomes saturated with the washed-away graphite powder or particles, which may block the fuel channel when entrained therein by the cooling liquid. Besides, when the porous graphite plates are used, filters and deionizers are required in the cooling liquid section to ensure the quality of the cooling liquid. These filters and deionizers, however, have considerable power consumption and thus also reduce the power generation efficiency of the fuel cell.

### Summary of the Invention

The present invention provides a fuel cell structure with a porous metal plate used as a bipolar plate. The porous metal plate has a certain rigidity that prevents the cooling liquid from eroding and therefore changing the size of the pores in the porous metal plate after extended use.

The present invention provides a fuel cell structure with a porous metal plate wherein, due to the high ductility and workability of the porous metal plate, a thin porous metal plate can be easily fabricated.

The present invention provides a fuel cell structure with a porous metal plate wherein the low material cost and low production cost of the porous metal plate reduce the overall production cost of the fuel cell structure.

The present invention provides a fuel cell structure with a porous metal plate, wherein the porous metal plate is hydrophilic and therefore eliminates production costs associated with the otherwise necessary step of performing hydrophilic treatment in advance.

To achieve the aforesaid objectives, the present invention provides a fuel cell structure with a porous metal plate The fuel cell structure with a porous metal plate includes: a membrane electrode assembly (MEA) comprising a proton exchange membrane (PEM), a pair of catalyst layers disposed on two outer surfaces of the PEM, and a pair of gas diffusion layers (GDLs) disposed on two outer surfaces of the pair of catalyst layers, respectively; a first porous metal plate disposed on a first outer surface of the pair of gas diffusion layers, wherein the first porous metal plate has at least one first cooling-liquid flow channel and at least one first fuel channel, and the first fuel channel makes contact with one of the gas diffusion layers; a metal plate disposed on a second outer surface of the pair of gas diffusion layers, wherein the metal plate has at least one second cooling-liquid flow channel and at least one second fuel channel, and the second fuel channel makes contact with the other of the gas diffusion layers; and a pair of end plates disposed on a third outer surface of the first porous metal plate and a fourth outer surface of the metal plate, respectively.

Implementation of the present invention at least involves the following inventive steps:
1. By virtue of the rigidity of the porous metal plate itself, pores of the porous metal plate will not change in size due to flushing of cooling liquid after extended use.
2. The porous metal plate is highly ductile and hence highly workable, thus allowing a thin porous metal plate to be fabricated easily.
3. The low material cost and low production cost of the porous metal plate help reduce the production cost of the fuel cell structure.
4. Since the porous metal plate has good hydrophilicity, the need for hydrophilic treatment of the porous metal plate and any associated costs can be eliminated.

### Brief Description of the Drawings

A detailed description of further features and advantages of the present invention is given below so that a person skilled in the art is enabled to understand and implement the technical contents of the present invention and readily comprehend the objectives and advantages thereof by reviewing the teachings disclosed herein and the appended claims in conjunction with the accompanying drawings, in which:
Fig. 1 is an exploded perspective view of an embodiment of a fuel cell stack having a porous metal plate according to the present invention;
Fig. 2A is a partially exploded sectional view of an embodiment of the fuel cell structure with the porous metal plate according to the present invention;
Fig. 2B is an assembled sectional view of the embodiment shown in Fig. 2A;
Fig. 3A is a schematic view of an embodiment of fuel channels of the porous metal plate according to the present invention;
Fig. 3B is a schematic view of an embodiment of cooling-liquid flow channels of the porous metal plate according to the present invention;
Fig. 4A is a perspective view of an embodiment of the porous metal plate according to the present invention; and
Fig. 4B is a partial sectional perspective view of an embodiment of the porous metal plate according to the present invention.

### Detailed Description of the Invention

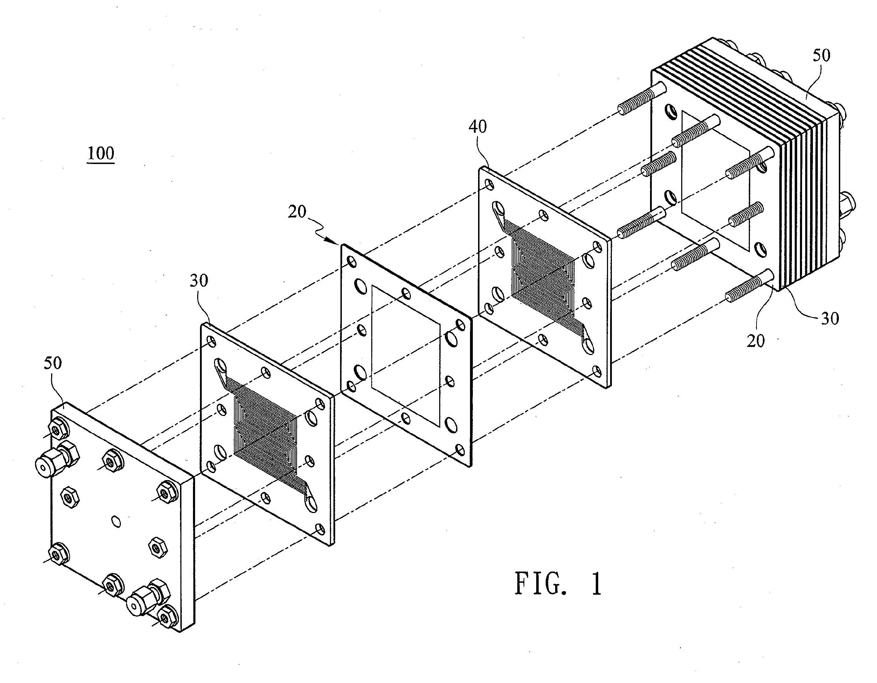

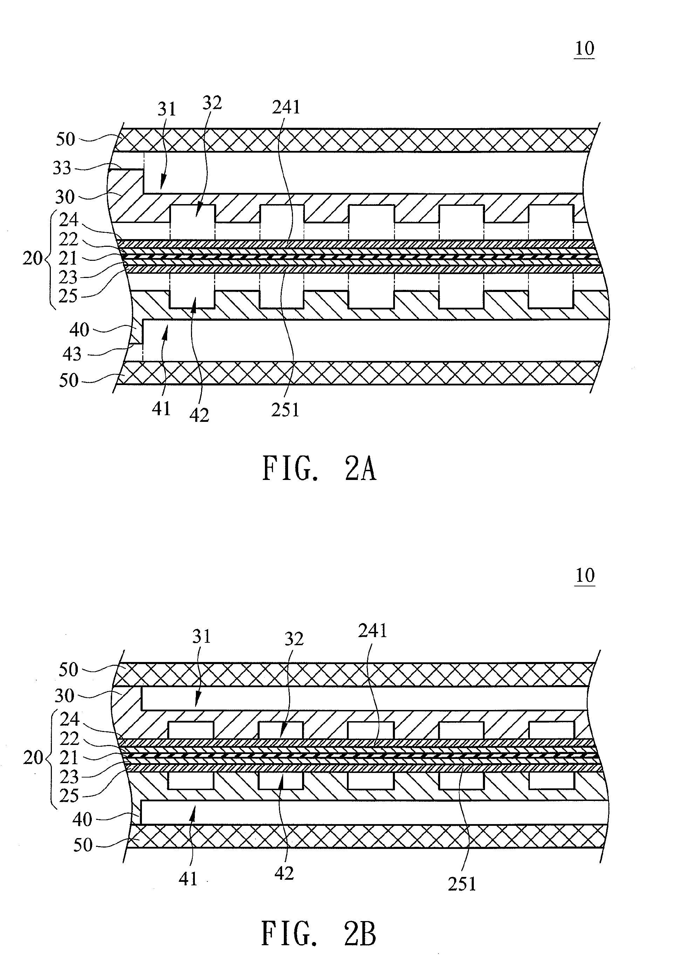

Fig. 1 shows a fuel cell stack 100 with porous metal plates. The fuel cell stack 100 is formed by stacking a plurality of fuel cell units together. However, for the convenience of description, the fuel cell stack 100 is simplified into a fuel cell structure 10 with a porous metal plate and including a sole fuel cell unit. As shown in Figs. 2A and 2B, the fuel cell structure 10 includes a membrane electrode assembly (MEA) 20, a first porous metal plate 30, a metal plate 40, and a pair of end plates 50. In practice, referring to Fig. 1, it is feasible to arrange sequentially between the pair of end plates 50, one first porous metal plate 30, one MEA 20, one metal plate 40, one MEA 20, one first porous metal plate 30, and so on. In other words, two adjacent MEAs 20 may share the same metal plate 40 and the same first porous metal plate 30.

Referring to Figs. 2A and 2B, the MEA 20 includes a proton exchange membrane (PEM) 21, a pair of catalyst layers 22, 23, and a pair of gas diffusion layers (GDLs) 24, 25. The pair of gas diffusion layers 24, 25 is an anode gas diffusion layer 24 and a cathode gas diffusion layer 25. The PEM 21 is configured primarily for providing a channel through which hydrogen ions (H⁺) can migrate from the anode gas diffusion layer 24 to the cathode gas diffusion layer 25. The catalyst layers 22, 23 are disposed on two outer surfaces of the PEM 21, respectively. The anode gas diffusion layer 24 and the cathode gas diffusion layer 25 are disposed on two outer surfaces of the two catalyst layers 22, 23, respectively.

More specifically, after fuel (e.g., hydrogen) and an oxidant (e.g., oxygen or air) enter the fuel cell structure 10, the hydrogen passes through the anode gas diffusion layer 24 and reaches the anode-side catalyst layer 22 where the hydrogen is decomposed into hydrogen ions (H⁺), which are positively charged, and electrons (e⁻), which are negatively charged. Then, the hydrogen ions pass through the PEM 21 to the cathode-side catalyst layer 23 while the electrons move out of the anode to form a current along an external circuit, thereby generating electric power. At the same time, in the cathode-side catalyst layer 23, oxygen undergoes an electrochemical reaction with the electrons and hydrogen ions produced at the anode side, and as a consequence, heat and water are generated.

The first porous metal plate 30 has at least one first cooling-liquid flow channel 31 and at least one first fuel channel 32. The first porous metal plate 30 is disposed on a first outer surface 241 of the gas diffusion layer 24 in such a way that the first fuel channels 32 make contact with the gas diffusion layer 24. The first fuel channels 32 serve as flow paths of the fuel or the oxidant and allow the fuel or the oxidant to make direct contact with the gas diffusion layer 24. As heat is generated from the electrochemical reaction in the fuel cell structure 10, the first cooling-liquid flow channels 31 are used to supply a flow of cooling liquid that carries the heat away from the fuel cell structure 10.

As shown in Figs. 2A and 2B, the metal plate 40, which is disposed on a second outer surface 251 of the other gas diffusion layer 25, has at least one second cooling-liquid flow channel 41 and at least one second fuel channel 42, wherein the second fuel channels 42 make contact with the gas diffusion layer 25. The second fuel channels 42 also serve as flow paths of the fuel or the oxidant, thus allowing the fuel or the oxidant to make direct contact with the gas diffusion layer 25. Likewise, the second cooling-liquid flow channels 41 are also used to supply a flow of cooling liquid for carrying heat out of the fuel cell structure 10.

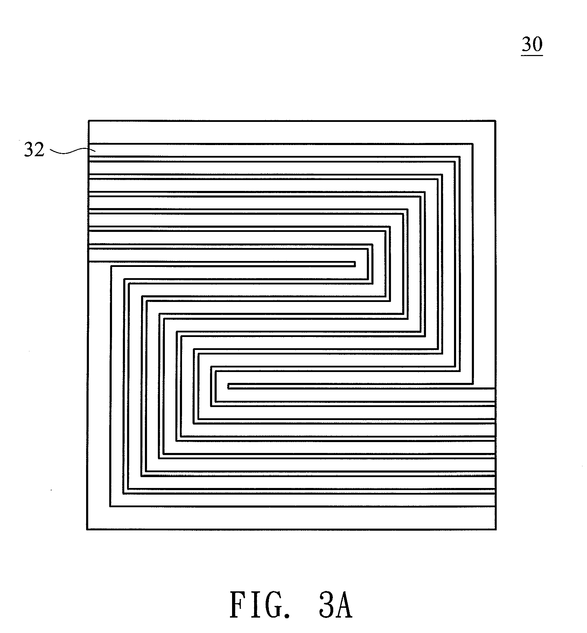

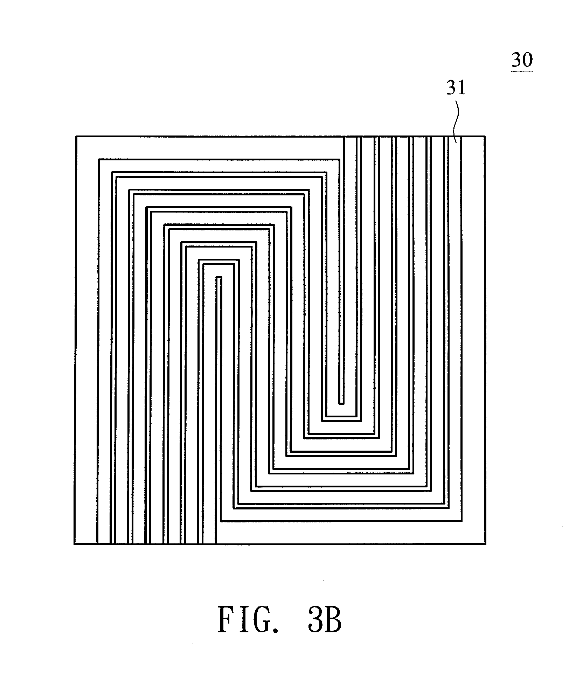

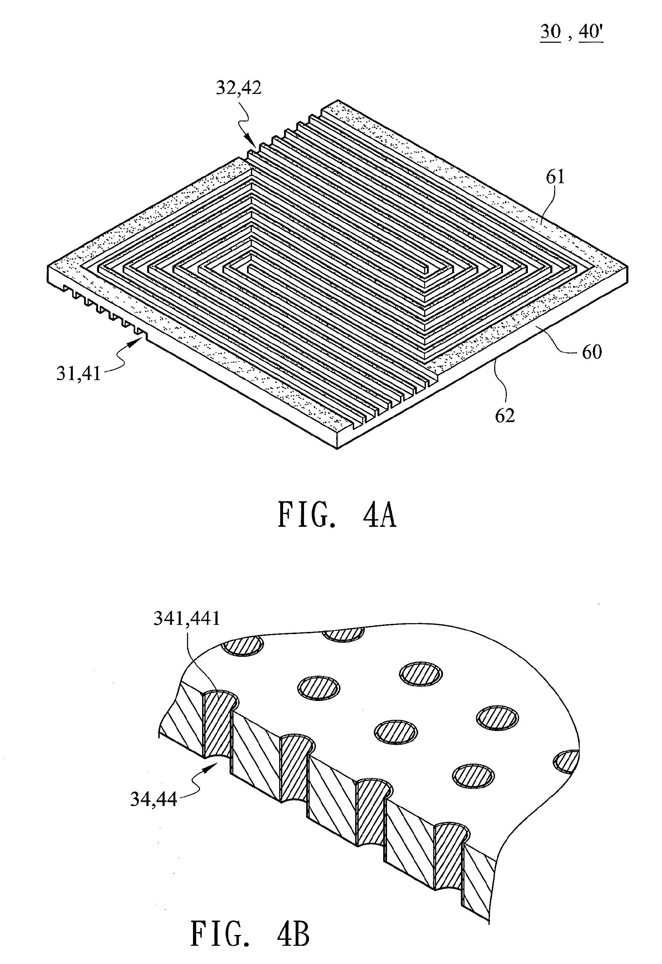

Referring to Fig. 3A, the first fuel channels 32 of the first porous metal plate 30 meander on the first porous metal plate 30 so that the fuel or oxidant flowing through the first fuel channels 32 can enter the gas diffusion layer 24 uniformly. Similarly, as shown in Fig. 3B, the first cooling-liquid flow channels 31 also meander on the first porous metal plate 30. The first cooling-liquid flow channels 31 and the first fuel channels 32 are located on two opposite surfaces of the first porous metal plate 30. Preferably, as shown in Fig. 4A, the first fuel channels 32 and the first cooling-liquid flow channels 31 have perpendicular flow directions. However, it should be noted that the first fuel channels 32 and the first cooling-liquid flow channels 31 are not limited to the aforesaid configurations. On the other hand, the location and arrangement of the second cooling-liquid flow channels 41 and the second fuel channels 42 of the metal plate 40 are similar to those of the first cooling-liquid flow channels 31 and the first fuel channels 32 of the first porous metal plate 30.

As shown in Fig. 2A, the end plates 50 are disposed on a third outer surface 33 of the first porous metal plate 30 and a fourth outer surface 43 of the metal plate 40, respectively, such that the first porous metal plate 30, the MEA 20, and the metal plate 40 are sandwiched between the two end plates 50. As shown in Fig. 2B, the end plates 50 contact with the first cooling-liquid flow channels 31 of the first porous metal plate 30 and the second cooling-liquid flow channels 41 of the metal plate 40 so as to close the first cooling-liquid flow channels 31 and the second cooling-liquid flow channels 41, respectively.

With reference to Figs. 2A and 2B, the first porous metal plate 30 and the metal plate 40 are disposed on the first outer surface 241 and the second outer surface 251 of the two gas diffusion layers 24, 25 of the MEA 20, respectively. It is feasible that the metal plate 40 is a compact metal plate while the first porous metal plate 30 has a plurality of pores 34 (as shown more clearly in Figs. 4A and 4B). Referring to Figs. 2A and 2B, as the first porous metal plate 30 is disposed on the first outer surface 241 of the anode gas diffusion layer 24, and the metal plate 40 is disposed on the second outer surface 251 of the cathode gas diffusion layer 25, the first fuel channels 32 can be used to provide flow paths for the fuel, and the second fuel channels 42 to provide flow paths for the oxidant.

In the fuel cell structure 10, the pressure in the first fuel channels 32 is lower than that in the first cooling-liquid flow channels 31. Since the first porous metal plate 30 has a plurality of pores 34, the pressure difference drives the cooling liquid flowing through the first cooling-liquid flow channels 31 to seep, by capillary action, into the first fuel channels 32 and thus humidify the fuel. Therefore, the cooling liquid seeps into the first fuel channels 32 to humidify the fuel and wet the PEM 21 before the electrochemical reaction takes place in the fuel cell structure 10.

Preferably, as shown in FIG. 4B, in order to prevent the pores 34 of the first porous metal plate 30 from being oxidized by long-term flushing of the cooling liquid, an anti-oxidation layer 341 is formed on a surface of each pore 34 to prevent erosion or rusting of the pores 34. The anti-oxidation layer 341 is made of a polymer or is an anti-oxidation metal layer that has been subjected to a surface blackening treatment.

The first porous metal plate 30 is disposed at the anode side to allow the cooling liquid to flow through capillary action from the first cooling-liquid flow channels 31 into the first fuel channels 32 through the pores 34. As a result, the cooling liquid not only humidifies the fuel but also wets the PEM 21, thereby maintaining the reaction efficiency of the fuel cell structure 10. Excess amounts of the cooling liquid are carried away from the fuel cell structure 10 along with the oxidant flow in the second fuel channels 42.

Preferably, the metal plate 40 is a second porous metal plate 40' whose structure is identical to that of the first porous metal plate 30. That is, the second porous metal plate 40' also has a plurality of pores 44, and an anti-oxidation layer 441 is provided on a surface of each pore 44, wherein the anti-oxidation layer 441 is also made of a polymer or is an anti-oxidation metal layer that has been subjected to a surface blackening treatment.

As shown in Fig. 2B, when excessive cooling liquid exists in the MEA 20, the cooling liquid will also be driven by a pressure difference to flow from the cathode side of the MEA 20 into the second fuel channels 42 and, by virtue of the capillary action, seep into the pores 44 of the second porous metal plate 40'. As a result, the cooling liquid flows from the second fuel channels 42 into the second cooling-liquid flow channels 41 and then exits the fuel cell structure 10 via the second cooling-liquid flow channels 41. Hence, when the first porous metal plate 30 and the second porous metal plate 40' constitute the bipolar plates of the fuel cell structure 10, the fuel cell structure 10 not only can humidify the fuel automatically but also is capable of discharging water, so distribution of the cooling liquid can be adjusted by controlling the pressure difference in the fuel cell structure 10.

As shown in Fig. 4A, both the first porous metal plate 30 and the second porous metal plate 40' have a porous metal plate structure which includes a metal plate body 60. On one surface 61 of the metal plate body 60 is formed at least one fuel channel (the first fuel channels 32 or the second fuel channels 42) configured to provide a flow path for the fuel or the oxidant, and on the other surface 62 of the metal plate body 60 is formed at least one cooling-liquid flow channel (the first cooling-liquid flow channels 31 or the second cooling-liquid flow channels 41) configured to provide a flow path for the cooling liquid.

As shown in Fig. 4B, the metal plate body 60 of the porous metal plate 30, 40' has a plurality of pores 34, 44, each of which has a surface provided with an anti-oxidation layer 341, 441 to prevent erosion or rusting in the pores 34, 44 which may otherwise compromise the ability of the porous metal plate 30, 40' to transport the cooling liquid.

The aforementioned embodiments are provided only to illustrate the features of the present invention so that those skilled in the art can understand and practice the present invention accordingly. It is understood that the embodiments are not intended to limit the scope of the present invention in any way. Therefore, all equivalent modifications and changes that do not depart from the spirit of the prevent invention should fall within the scope of the following claims.

## Claims

1. A fuel cell structure (10) with a porous metal plate, comprising:
a membrane electrode assembly (MEA) (20) comprising a proton exchange membrane (PEM) (21), a pair of catalyst layers (22, 23) disposed on two outer surfaces of the PEM (21), and a pair of gas diffusion layers (GDLs) (24, 25) disposed on two outer surfaces of the pair of catalyst layers (22, 23), respectively;
a first porous metal plate (30) disposed on a first outer surface (241) of the pair of gas diffusion layers (24, 25), wherein the first porous metal plate (30) has at least one first cooling-liquid flow channel (31) and at least one first fuel channel (32), and the first fuel channel (32) makes contact with one of the gas diffusion layers (24, 25);
a metal plate (40) disposed on a second outer surface (251) of the pair of gas diffusion layers (24, 25), wherein the metal plate (40) has at least one second cooling-liquid flow channel (41) and at least one second fuel channel (42), and the second fuel channel (42) makes contact with the other of the gas diffusion layers (24, 25); and
a pair of end plates (50) disposed on a third outer surface (33) of the first porous metal plate (30) and a fourth outer surface (43) of the metal plate (40), respectively.

2. The fuel cell structure (10) of Claim 1, wherein the first porous metal plate (30) has a plurality of pores (34), and each said pore (34) has a surface provided with an anti-oxidation layer (341).

3. The fuel cell structure (10) of Claim 2, wherein the anti-oxidation layer (341) is made of a polymer or is an anti-oxidation metal layer that has been subjected to a surface blackening treatment.

4. The fuel cell structure (10) of Claim 1, wherein the metal plate (40) is a compact metal plate or a second porous metal plate (40').

5. The fuel cell structure (10) of Claim 4, wherein the second porous metal plate (40') has a plurality of pores (44), and each said pore (44) has a surface provided with an anti-oxidation layer (441).

6. The fuel cell structure (10) of Claim 5, wherein the anti-oxidation layer (441) is made of a polymer or is an anti-oxidation metal layer that has been subjected to a surface blackening treatment.

7. The fuel cell structure (10) of Claim 1, wherein the pair of gas diffusion layers (24, 25) are a cathode gas diffusion layer (25) and an anode gas diffusion layer (24), and the first porous metal plate (30) is disposed on the first outer surface (241) of the anode gas diffusion layer (24) while the metal plate (40) is disposed on the second outer surface (251) of the cathode gas diffusion layer (25).

8. The fuel cell structure (10) of Claim 7, wherein the metal plate (40) is a second porous metal plate (40') having a plurality of pores (44), and each said pore (44) has a surface provided with an anti-oxidation layer (441).

9. The fuel cell structure (10) of Claim 8, wherein the anti-oxidation layer (441) is made of a polymer or is an anti-oxidation metal layer that has been subjected to a surface blackening treatment.

10. A porous metal plate structure (30, 40') for use in a fuel cell, the porous metal plate structure (30, 40') comprising a metal plate body (60), the metal plate body (60) having one surface (61) formed with at least one fuel channel (32, 42) and the other surface (62) formed with at least one cooling-liquid flow channel (31, 41).

11. The porous metal plate structure (30, 40') of Claim 10, wherein the metal plate body (60) has a plurality of pores (34, 44), and each said pore (34, 44) has a surface provided with an anti-oxidation layer (341, 441).

12. The porous metal plate structure (30, 40') of Claim 11, wherein the anti-oxidation layer (341, 441) is made of a polymer or is an anti-oxidation metal layer that has been subjected to a surface blackening treatment.
